(19) Europäisches Patentamt

European Patent Office

Office européen des brevets

(11) EP 1 586 070 B1

(12) EUROPÄISCHE PATENTSCHRIFT

(45) Veröffentlichungstag und Bekanntmachung des Hinweises auf die Patenterteilung:
**06.09.2006 Patentblatt 2006/36**

(21) Anmeldenummer: **04704555.4**

(22) Anmeldetag: **23.01.2004**

(51) Int Cl.:
**G06K 1/00** (2006.01)

(86) Internationale Anmeldenummer:
**PCT/EP2004/000572**

(87) Internationale Veröffentlichungsnummer:
**WO 2004/066186 (05.08.2004 Gazette 2004/32)**

(54) **VERFAHREN UND VORRICHTUNG ZUR IDENTIFIKATION UND KOMPENSATION EINER PERSPEKTIVISCHEN VERZERRUNG**

METHOD AND DEVICE FOR IDENTIFYING AND COMPENSATING A PERSPECTIVISTIC DEFORMATION

PROCEDE ET DISPOSITIF POUR DETECTER ET COMPENSER UNE DEFORMATION DE PERSPECTIVE

(84) Benannte Vertragsstaaten:
**DE FR IT**

(30) Priorität: **23.01.2003 DE 10302634**

(43) Veröffentlichungstag der Anmeldung:
**19.10.2005 Patentblatt 2005/42**

(73) Patentinhaber: **SIEMENS AKTIENGESELLSCHAFT**
**80333 München (DE)**

(72) Erfinder: **SCHORB, Herbert**
**76199 Karlsruhe (DE)**

(56) Entgegenhaltungen:
**US-A- 5 073 954          US-A- 5 378 881**
**US-A- 5 742 041**

**Beschreibung**

Die Erfindung betrifft ein Verfahren und eine Vorrichtung zur Identifikation und Kompensation einer perspektivischen Verzerrung in einem Bild eines ebenen, zweidimensionalen, rechteckigen Code-Feldes mit in Zeilen und Spalten angeordneten Modulen.

In der automatisierten Fertigungstechnik, insbesondere in der Montagetechnik, werden zur Materialflusssteuerung und Qualitätskontrolle immer häufiger Identifizierungscodes auf einzelne Montageteile aufgebracht. Früher waren dies in der Regel Barcodes, die neuerdings zunehmend von zweidimensionalen Punktecodes abgelöst werden. Die elementaren Informationseinheiten werden dabei nicht mehr durch Balkenstärke, Balkenabstand oder Balkenanzahl verkörpert, sondern durch zweidimensional angeordnete, helle oder dunkle Punkte, so genannte Module. Eine geläufige Form derartiger Codes sind die so genannten Data Matrix-Codes die in der Norm ISO/IEC 16022 spezifiziert sind. Die Module sind je nach Codetyp in einer quadratischen oder rechteckigen Matrix angeordnet. Neben Modulen mit dem eigentlichen Informationsinhalt umfasst das Code-Feld auch unveränderliche Merkmale, die es für Leseeinrichtungen ermöglichen, das Code-Feld zu lokalisieren und seine Orientierung zu bestimmen. Um im Fertigungsprozess ein auf einem Montageteil aufgebrachtes Code-Feld automatisch lesen zu können, sind eine geeignete Leseeinrichtung mit Videokamera, sofern erforderlich eine Beleuchtung, ein Bildspeicher und eine Bildverarbeitungseinrichtung erforderlich. Die Videokamera sollte möglichst senkrecht über dem Code-Feld angeordnet werden, damit allenfalls geringe Verzerrungen des Code-Bildes gegenüber dem Original auftreten. Wird die Kamera schräg über dem Code-Feld angeordnet, so treten Verzerrungen auf. Bei einer schrägen Ansicht von einer Seite erfolgt unter der in der Praxis berechtigten Annahme einer parallelperspektivischen Abbildung eine rechteck- oder trapezförmige Verzerrung, bei schräger Ansicht auf eine Ecke des Code-Feldes eine Parallelogrammverzerrung des Code-Bildes. Derartige Verzerrungen erschweren das Lesen des im Code-Feld hinterlegten Dateninhalts oder machen es gar, wenn keine Maßnahmen zur Kompensation von Verzerrungen getroffen werden, unmöglich.

US 5742 041 (Lin) beschreibt ein Verfahren und Vorrichtung zur Lokalisierung und Identifikation von einem zweidimensionalen, rechteckigen Code-Feldes

Als eine Möglichkeit zur manuellen Erfassung einer Verzerrung durch einen Bediener wäre es denkbar, dass der Bediener die Deformation des Code-Bildes eines im Original orthogonalen Code-Feldes durch eine Umrandung des Code-Bildes auf einer Anzeigeeinheit mit graphischer Bedienoberfläche vorgibt. Eine derartige Vorgabe wäre jedoch statisch, mit großem Bedienaufwand verbunden, gegebenenfalls fehlerhaft und für Variationen der Code-Feldlage im Betrieb nicht geeignet.

Der Erfindung liegt die Aufgabe zugrunde, ein Verfahren und eine Vorrichtung zur Identifikation und Kompensation einer perspektivischen Verzerrung in einem Bild eines ebenen, zweidimensionalen, rechteckigen Code-Feldes mit in Zeilen und Spalten angeordneten Modulen zu schaffen, die ohne aufwendige Bedienereingaben auskommen und auch dann anwendbar sind, wenn eine Videokamera nicht genau senkrecht über dem Code-Feld angeordnet ist.

Zur Lösung dieser Aufgabe weist das neue Verfahren der eingangs genannten Art die Merkmale des Anspruchs 1, die neue Vorrichtung die Merkmale des Anspruchs 6 auf. In den abhängigen Ansprüchen sind vorteilhafte Weiterbildungen beschrieben.

Die Erfindung hat den Vorteil, dass im Fertigungsprozess auf ein Montageteil aufgebrachte Code-Felder automatisch abgelesen werden können, selbst wenn Lage und Orientierung der Code-Felder variieren. Die neue Bildverarbeitungseinrichtung hat die Fähigkeit, bei einfacher Handhabung ohne aufwendige Bedienereingaben automatisch die Zeilen und Spalten eines rechteckigen Code-Feldes zu lokalisieren und somit den CodeTyp zu identifizieren, so dass für eine nachgeschaltete Verarbeitungseinheit das Gewinnen der in dem Code hinterlegten Information ermöglicht wird. Es werden die genaue Lage des Code-Bildes im aufgenommenen Bild bezüglich Ort und Verdrehung sowie der Abbildungsmaßstab detektiert. Derartige Eigenschaften sind besonders vorteilhaft, wenn Code-Felder von Montageteil zu Montageteil ihre Lage ändern, ihre Abbildungsgrößen variieren oder sich möglicherweise der Typ des Codes ändert. Insbesondere bei manuell betätigten Lesegeräten, aber nicht nur bei diesen, sind solche perspektivischen Verzerrungen zu erwarten. Mit den identifizierten Eigenschaften der Verzerrung lässt sich abschließend das Code-Bild in eine normalisierte Form umsetzen. Diese Form ist gekennzeichnet durch die orthogonale Anordnung der Module, einen einheitlichen, parametrierbaren Abstand zwischen benachbarten Modulen sowie im Fall eines Data Matrix-Codes durch eine normalisierte Drehlage derart, dass der Bezugseckpunkt des Code-Feldes in der links unten liegenden Ecke des normalisierten Bildes angeordnet ist.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1        ein Blockschaltbild einer Lesevorrichtung für Code-Felder, welche eine Identifikation und Kompensation einer perspektivischen Verzerrung vornimmt,

Figur 2      ein Auswertefenster mit einem Code-Bild und angetragenem Scherwinkel,

Figur 3      ein Code-Bild mit Kantenfilterung für vertikale Kanten in einem Teilausschnitt,

Figur 4      ein für den Teilausschnitt in Figur 3 berechnetes Projektionssignal,

Figur 5      ein Autokovarianzsignal, das anhand des Projektionssignals gemäß Figur 4 erhalten wurde,

Figur 6      einen Signalverlauf zur Erläuterung der Bestimmung von vorläufigen Hypothesen für Endpunkte von Modulzeilen oder -spalten,

Figur 7      ein Code-Bild mit eingezeichneten vorläufigen Hypothesen für die Endpunkte von Modulspalten,

Figur 8      ein Code-Bild mit endgültigen Hypothesen für Endpunkte von Modulspalten,

Figur 9      ein Code-Bild mit eingetragenen Verbindungslinien zur Erläuterung der Randliniensuche,

Figur 10     ein Code-Bild mit markierten Randlinien,

Figur 11     ein Code-Bild mit markierten Passpunkten und

Figur 12     ein entzerrtes Code-Bild.

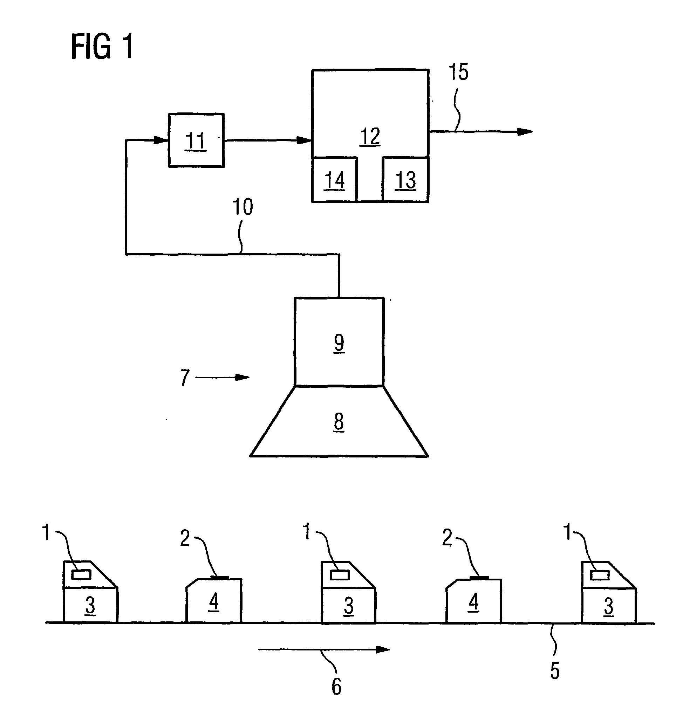

In Figur 1 ist ein Blockschaltbild einer Lesevorrichtung für Code-Felder 1 und 2 auf Objekten 3 bzw. 4 dargestellt. Die Code-Felder 1 befinden sich auf einer nach vorne abgeschrägten Fläche der Objekte 3, während die Code-Felder 2 auf der Oberseite der Objekte 4 angeordnet sind. Durch ein Förderband 5 werden die Objekte 3 und 4 in Laufrichtung des Förderbandes 5, die durch einen Pfeil 6 angedeutet ist, an einer Bildaufnahmeeinrichtung 7, beispielsweise einer Videokamera, die zur Aufnahme jeweils eines Bildes der Objekte 3 und 4 dient, vorbeigeführt. Die Bildaufnahmeeinrichtung 7 besteht im Wesentlichen aus einem Objektiv 8 und einem CCD-Sensor 9, auf welchem die Objekte 3 und 4 abgebildet werden. Der CCD-Sensor 9 liefert dem aufgenommenen Bild entsprechende Signale 10, die in einem Bildspeicher 11 abgelegt werden. Die Bilddaten sind durch eine Recheneinheit 12 auslesbar, welche zur Durchführung der bei der Bildverarbeitung erfolgenden Berechnungen vorgesehen ist. Eine Tastatur als Eingabeeinrichtung mit evtl. erforderlichen Bedienknöpfen und ein Bildschirm als Anzeigeeinrichtung, die in üblicher Weise zur Bedienung der Recheneinheit 12 vorhanden sind, sind in der Zeichnung der Übersichtlichkeit wegen nicht dargestellt. Zur Hinterlegung der Bilddaten eines aufgenommenen Code-Bildes, die sich in einem Auswertefenster befinden, ist ein Speicher 13 vorhanden, auf welchen ebenfalls durch die Recheneinheit 12 zugegriffen werden kann. Eine anhand des Code-Bildes erzeugte Matrix aus zweiwertigen Elementen wird in einem Speicher 14 hinterlegt. Diese Matrix wird über eine Leitung 5 an eine weitere Funktionseinheit übertragen, welche in bekannter Weise anhand der Matrix den Informationsgehalt des Codes ermittelt. Diese Information kann zur Steuerung einer in der Figur nicht näher dargestellten fertigungstechnischen Anlage verwendet werden. Alternativ kann die Recheneinheit 12 selbst die Dekodierung durchführen, so dass die weitere Funktionseinheit entfällt und der Informationsgehalt des Codes über die Leitung 15 übertragen wird. Die Bildaufnahmeeinrichtung besteht somit aus den Komponenten 8 und 9, die Bildverarbeitungseinrichtung aus den Komponenten 11 bis 14.

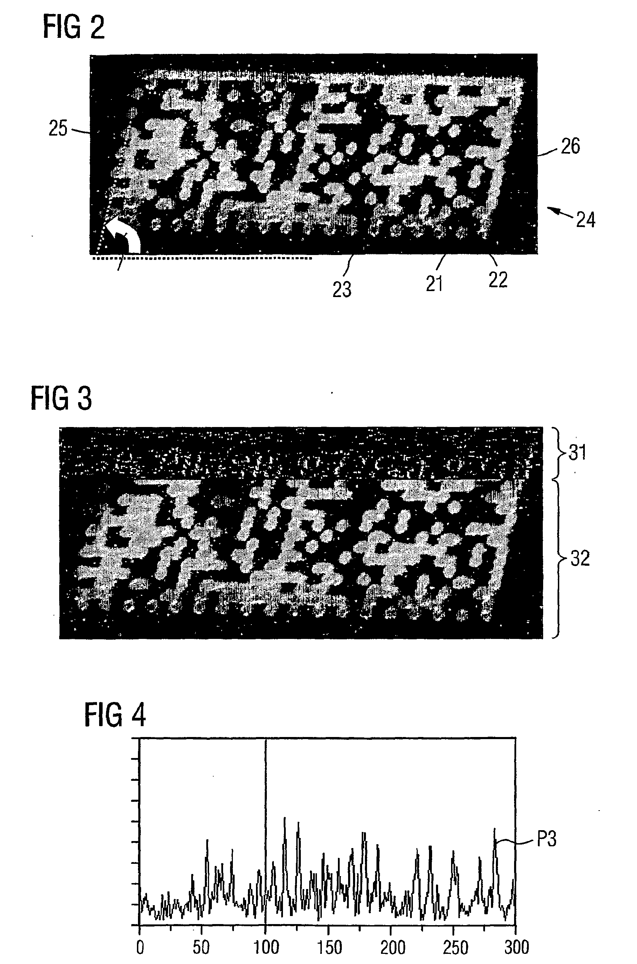

In einer Vorverarbeitung des aufgenommenen Bildes wird mit herkömmlichen Mitteln, beispielsweise unter Zuhilfenahme einer Kantendetektion, ein das Code-Bild umschreibendes, rechteckiges Fenster bestimmt, das im Folgenden als Auswertefenster 24 bezeichnet wird. Dieses umfasst das Code-Bild gemäß Figur 2 so, dass seine Grundseite 23 ungefähr parallel zu einer unteren Randlinie des Code-Bildes liegt, das in der Figur 2 als im Wesentlichen parallelogrammförmiges Feld hellerer und dunklerer Module erkennbar ist. Dabei ist ein Restfehler von etwa $\pm$ 5° sowie eine Verdrehung des Code-Bildes im Auswertefenster um Vielfache von 90° zulässig. Im gezeigten Ausführungsbeispiel erscheint das Code-Bild im Auswertefenster im Vergleich zum Hintergrund hell. Bei dunklem Code-Bild auf einem helleren Hintergrund kann dies durch eine vorgelagerte Invertierung der Bildhelligkeit erreicht werden. Ein weiteres Ergebnis der Vorverarbeitung ist die Vorbestimmung eines Schätzwertes für einen Scherwinkel $\alpha$, der in diesem Ausführungsbeispiel den zwischen der linken Randlinie 25 und der unteren Randlinie des Code-Bildes eingeschlossenen Winkel beschreibt.

Die geometrischen Abmessungen des originalen Code-Feldes sind klein in Relation zu der Entfernung zwischen der Bildaufnahmeeinrichtung und dem Code-Feld. Deshalb kann auf ein affines Abbildungsmodell für die Beschreibung der Verzerrung des Code-Bildes gegenüber dem originalen Code-Feld zurückgegriffen werden. Das Code-Feld sollte über seine gesamte Fläche scharf als Code-Bild abgebildet sein. Unschärfen aufgrund von Bewegung oder partieller oder ganzflächiger Defokussierung sollten vernachlässigbar sein. Eine Auflösung von 5 Pixel des CCD-Sensors je Modul sollte dabei überschritten werden.

Es handelt sich im gezeigten Beispiel um einen Data Matrix-Code. Eine besondere Eigenschaft sind zwei benachbarte, durchgehende Randlinien und zwei benachbarte Randlinien mit alternierenden Helligkeitswerten, die als L-Randlinien bezeichnet werden. Die Erfindung ist jedoch ohne Weiteres auch bei anderen Code-Typen anwendbar.

Entlang der vertikalen Randbereiche des Auswertefensters erfolgt jeweils eine Kantenfilterung für horizontal verlaufende Kanten, wodurch Helligkeitsdifferenzen einander benachbarter Pixel und somit die oberen und unteren Begrenzungen der Modulzeilen hervorgehoben werden. Entlang des Randbereichs an der horizontalen Grundlinie des Auswertefensters und entlang des Randbereichs an der oberen Seite erfolgt jeweils eine Kantenfilterung für vertikal verlaufende Kanten, wodurch die links- und rechtsseitigen Begrenzungen der Modulspalten hervorgehoben werden. In Figur 3 ist die Wirkung dieser Maßnahme am Beispiel der Kantenfilterung im Randbereich 31 an der oberen Seite des Auswertefensters verdeutlicht. Die Kantenfilterung wird in einem Bereich zwischen 0 und 25% der Fensterhöhe ausgehend von der oberen Fensterseite durchgeführt. Im oberen Teilbereich 31 von Figur 3 sind die jeweiligen Helligkeitswerte der Pixel nach einer Kantenfilterung dargestellt, während der untere Bildbereich 32 das Originalbild des entsprechenden Code-Feldabschnitts zeigt. Deutlich sind die entlang der oberen Seite des Auswertefensters hervorgehobenen vertikalen Kanten sichtbar.

Die bis jetzt noch als zweidimensionale Bildinformation in den Streifen entlang der vier Seiten des Auswertefensters vorliegenden Helligkeitsstrukturen werden jeweils auf einen eindimensionalen Signalverlauf Pk, k = 1...4 als Index, reduziert, der als Beispiel für den Streifen an der oberen Seite des Auswertefensters als P3 in Figur 4 dargestellt ist. In den links- und rechtsseitigen Streifen werden dazu jeweils alle horizontal nebeneinanderliegende Pixelwerte addiert. Im unteren und oberen Streifen werden die Pixel dagegen nicht statisch in vertikaler Richtung akkumuliert, sondern in der Richtung, die dem vorbestimmten Scherwinkel $\alpha$ entspricht.

Ist dieser zum Beispiel 80°, so wird in einer nach rechts geneigten Richtung akkumuliert, entsprechend bei 90° senkrecht und bei 120° in einer nach links geneigten Richtung. Es ist in Figur 4 deutlich zu sehen, dass sich als charakteristische Eigenschaften im Projektionssignal P3 die Kanten von Modulspalten stark kontrastiert hervorheben. Ähnlich geschieht dies für die Modulzeilen in den Signalverläufen Pk für die Streifen auf der linken und rechten Seite des Auswertefensters.

In den Figuren 4 bis 6 sind auf der Abszisse die Pixelpositionen und auf der Ordinate die jeweiligen Signalwerte aufgetragen.

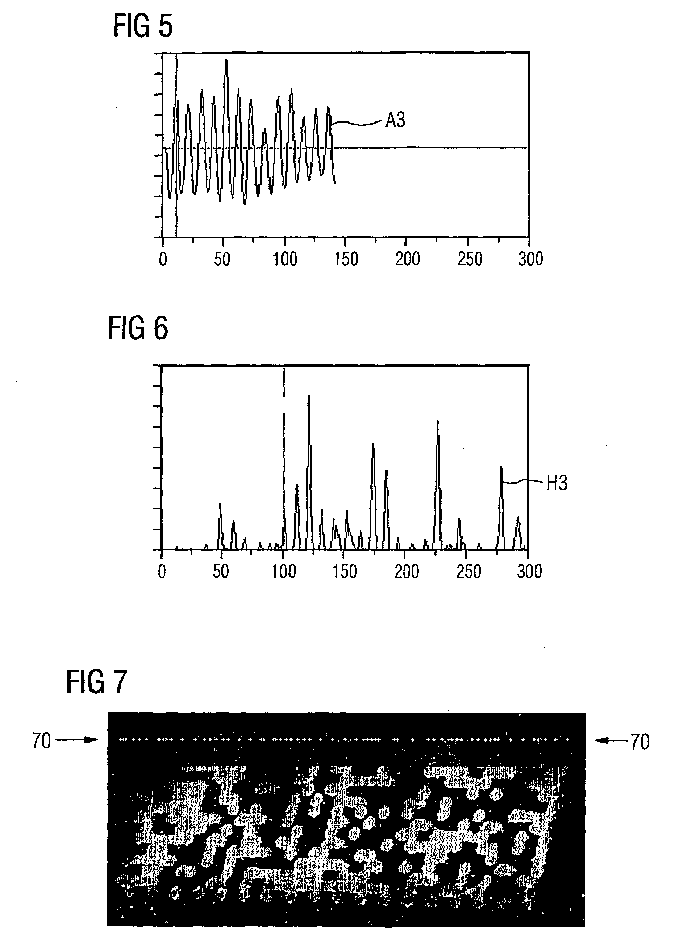

Die vier Projektionssignale Pk, k = 1, 2, 3 bzw. 4, werden je einer Autokovarianzoperation unterzogen mit dem Ziel, die Signalperiodizität, das heißt die örtliche Folgefrequenz von Modulspalten bzw. Zeilen für jede Seite des Auswertefensters zu bestimmen. Bekanntermaßen werden in einer Autokovarianzfunktion statistisch unabhängige Störanteile des Basissignals unterdrückt, periodische Signalanteile jedoch verstärkt. Ein Beispiel eines Autokovarianzsignals Ak für das Projektionssignal P3 zeigt Figur 5. Durch Vermessung der periodisch wiederkehrenden, lokalen Maxima der Autokovarianzsignale Ak, k = 1...4, wird für jeden Randbereich ein Schätzwert für die Modulfrequenz in "Pixel je Modul" gewonnen. Damit ist die Ermittlung der örtlichen Modulfrequenzen entlang der vier Seiten des Auswertefensters unter Berücksichtigung des vorbestimmten Scherwinkels $\alpha$ abgeschlossen. Das beispielhaft in Figur 5 dargestellte Autokovarianzsignal A3 zeigt offensichtlich eine Periodenlänge von ca. 11 Pixeln je Modul.

Mit je einer nichtlinearen Filteroperation wird danach aus jedem der vier Projektionssignale Pk jeweils ein Signal Hk ermittelt, in welchem Hypothesen für die Positionen von Endpunkten von Spalten- bzw. Zeilenmittellinien als Maxima erscheinen. Der dazu verwendete Filteroperator wird adaptiert für jede der zuvor ermittelten Modulfrequenzen. Aus der jeweiligen Frequenz wird die örtliche Ausdehnung nk des Definitionsbereichs Rk des jeweiligen Operators bestimmt. Dies entspricht der Breite einer Region, auf welche der Operator wirkt. nk entspricht der jeweils ermittelten Modulfrequenz, die auf den nächsten ganzzahligen Wert gerundet wird. Beispielsweise wird nk = 7 gesetzt bei einer gemessenen Frequenz von 7,34 Pixeln je Modul. Der Operator ist für jeden Ort i - i bezeichnet die Pixelstelle - des jeweiligen Projektionssignals Pk, k = 1...4, anzuwenden. Er lautet

$$Hk[i] = (Pk[i - nk/2] - \min(Rk[i])) * (P[i + nk/2] - \min(Rk[i])).$$

$\min(Rk[i])$ steht für den minimalen Wert des Projektionssignals Pk in der Umgebung $Rk[i] = \{Rk[j] \mid i + nk/2 \geq j \geq i - nk/2\}$ um den Signalwert an der Stelle i.

Die Signale Hk, k = 1...4, nehmen besonders hohe positive Werte an Stellen i an, bei denen zu beiden Endpunkten der Operatorregion Rk hohe Projektionswerte vorliegen und gleichzeitig der minimale Wert in der Region klein ist. Die lokalen Maximalwerte von Hk werden als vorläufige Hypothesen für die Endpunkte von Modulspalten bzw. Modulzeilen weiterverarbeitet. Figur 6 zeigt den Verlauf eines Signals H3, das aus dem in Figur 4 dargestellten Projektionssignal P3 mit Hilfe des Operators gemäß obiger Gleichung gewonnen wurde. Die lokalen Maximalwerte, die in Figur 6 deutlich sichtbar sind, entsprechen den vorläufigen Hypothesen für Endpunkte von Modulspalten an der oberen Seite des Auswertefensters.

In Figur 7 sind die vorläufigen Hypothesen für die Endpunkte als Linie ungleichmäßig beabstandeter weißer Punkte im oberen Randbereich des Auswertefensters eingezeichnet, die mit dem Bezugszeichen 70 versehen ist. Die Ermittlung aller lokaler Maximalwerte der Signale Hk erbringt somit für jede Fensterseite eine Liste gemessener Positionswerte. Wie an Figur 7 deutlich wird, ist in den Listen mit Fehleinträgen zu rechnen, die beispielsweise aufgrund von störenden Artefakten im Originalbild trotz aller vorangegangener Operationsstufen auftreten können. Deshalb werden zunächst in einer Sortieroperation all diejenigen Einträge aus den Listen entfernt, deren Abstände zu ihren vier umgebenden Nachbarpositionen mehrheitlich nicht der einfachen oder zweifachen gemessenen Modulfrequenz entsprechen. Da die Positionsangaben aufgrund der ganzzahligen Messungen der Maximapositionen ungenau sind, ist bei den Vergleichen eine geringfügige Toleranz von 0,5 Pixel zuzulassen. Von den verbleibenden Positionen wird nun angenommen, dass sie gut ausgeprägte Endpositionen von Modulzeilen bzw. Spalten markieren. Allerdings sind die Listen meist lückenhaft, können immer noch einzelne Fehlpositionen enthalten und ihre Positionswerte sind nach wie vor unpräzise. Mit Hilfe der bekannten Methode des kleinsten quadratischen Fehlers werden diese Defekte nun beseitigt. Dazu wird eine lineare Abbildungsvorschrift zwischen den idealisierten Indizes xi der in der Positionsliste verbliebenen Positionen und den gemessenen Positionswerten Xi als Modell zugrunde gelegt:

$$Xi = a*xi + b$$

Darin sind Xi die Liste der gemessenen Positionen in Vektorschreibweise, xi jeweils zugeordnete idealisierte Indizes der Positionen in Vektorschreibweise, a und b skalare Parameter.

Die Parameter a und b können ermittelt werden, sofern mindestens zwei korrespondierende Wertepaare (xi, Xi) vorliegen. Je nach Codetyp liegen jedoch deutlich mehr Paare vor, so dass sich a und b als Fehler ausgleichende Werte ergeben. Während die gemessenen Positionen Xi aus der Positionsliste direkt zu übernehmen sind, sind wegen der potentiellen Lückenhaftigkeit der Positionsliste für die idealisierten Indizes xi die zugehörigen Indizes i nicht unmittelbar geeignet. Statt dessen werden die idealisierten Indizes folgendermaßen indirekt aus der Positionsliste ermittelt. Für die erste Position X0 der Liste wird statisch der Index x0 = i = 0 vergeben und somit das Korrespondenzpaar (x0 = 0, X0) postuliert. Bei allen weiteren Paaren entsteht der zugeordnete idealisierte Index xi als Quotient aus der Differenz Xi - X0 und der gemessenen Modulfrequenz, die auf die jeweils nächste ganze Zahl gerundet wurde. Beispielsweise resultieren aus den Positionen Xi einer Positionsliste bei einer gemessenen Modulfrequenz von 11 Pixeln je Modul folgende Wertepaare {(xi, Xi) | 0 ≤ i < n} = {(0, 8.5), (1, 19.4), (2, 30.6), (4, 52.7), (6, 74.2), ....}.

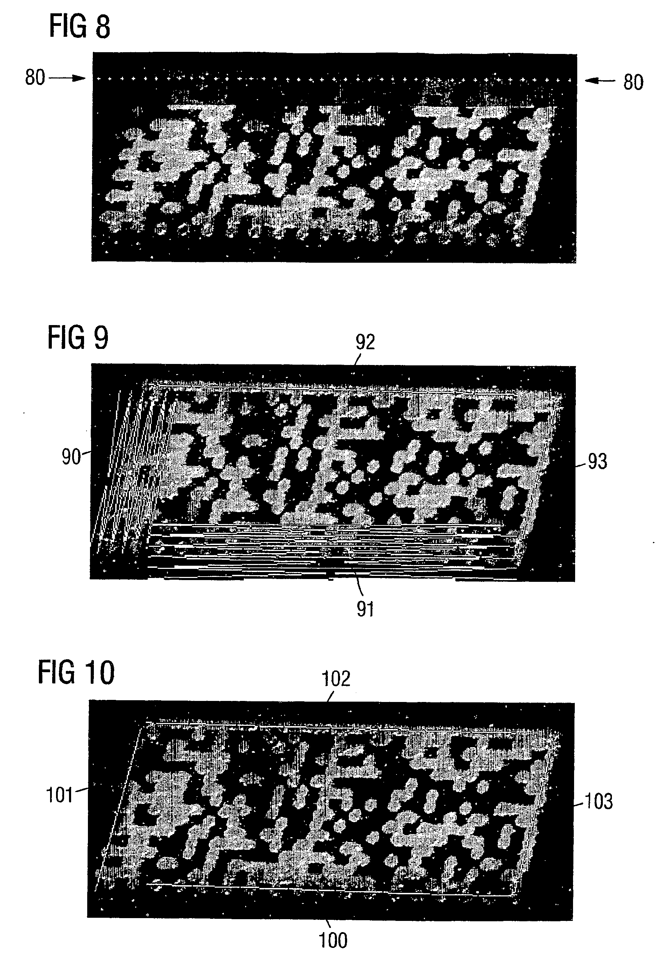

Nachdem a und b mit der Methode des kleinsten quadratischen Fehlers ermittelt sind, ist die oben genannte Modellgleichung anzuwenden, um über die volle Länge des jeweiligen Randbereichs des Auswertefensters präzise Hypothesen für Endpunkte von Modulspalten bzw. Modulzeilen zu ermitteln. Hierin sind nun auch diejenigen Positionen enthalten, die als vorläufige Hypothese eines Endpunktes nicht sichtbar wurden, allerdings auch Pseudopositionen, die zwischen den Grenzen des Code-Bildes und dem Rand des Auswertefensters liegen und sich somit nicht mit realen Zeilen oder Spalten des Code-Bildes decken. Damit sind Hypothesen für Endpunkte von Modulspalten und Modulzeilen ermittelt. Diese sind in Figur 8 als eine Linie gleich beanstandeter weißer Punkte für das Beispiel des oberen Randbereichs des Auswertefensters eingezeichnet, die mit dem Bezugszeichen 80 versehen ist.

Aus den Listen der Positionen der links- und rechtsseitigen Endpunkte von Modulzeilen sind nun die beiden Endpunktepaare zu finden, welche die ungefähr horizontal verlaufenden Randzeilen des Code-Bildes repräsentieren. Entsprechendes gilt für die Paare oben- und untenseitiger Endpunkte bezüglich der ungefähr vertikal verlaufenden, allerdings um den Scherwinkel α geneigten Randspalten. Als Basismesswerte für die Auswahl einer möglichen Randlinie werden ein Mittelwert M der Bildhelligkeit sowie eine Streuung σ der Bildhelligkeit um den Mittelwert entlang der Verbindungslinie zwischen den beiden Endpunkten herangezogen. Die Berechnung der beiden Statistikwerte erfolgt, nachdem der aus dem Bild entnommene Helligkeitsverlauf einer Medianfilterung unterzogen wurde, wodurch isolierte Helligkeitsextreme nivelliert werden. Aus den Basismesswerten wird für jede hypothetische Randlinie ein Merkmalswert M gemäß folgender Formel berechnet:

M = m$^2$ / (σ + m + 1), wobei m der Mittelwert und σ die Streuung um den Mittelwert m sind.

Beginnend mit dem jeweils äußeren, am Fensterrand liegenden Positionspaar bis zu dem Paar, welches ca. 25% der Fensterhöhe bzw. Breite markiert, und unter Berücksichtigung aller in diesem Bereich möglicher Positionskombinationen werden Mittelwert und Streuungen entlang der Verbindungslinien berechnet. Dies geschieht für alle vier Seiten des Auswertefensters. In Figur 9 sind mögliche Verbindungslinien 90 und 91 für die linke bzw. die untere Seite des Auswertefensters dargestellt. Aus einer Menge in entsprechender Weise für die obere und die rechte Seite des Auswertefensters festgelegter Verbindungslinien wurde nach einem vorbestimmten Kriterium eine obere Randlinie 92 und eine rechte Randlinie 93 gefunden. Im Fall eines Data Matrix-Codes sind dies die Randlinien, für welche sich der größte Merkmalswert M ergab.

Bei anderen Codetypen kann beispielsweise gemäß einem anderen Auswahlkriterium diejenige Verbindungslinie als Randlinienhypothese ausgewählt werden, die von einer dazu direkt benachbarten, weiter außen liegenden und parallelen Verbindungslinie die stärkste Abweichung der Summenhelligkeit ergibt. Damit wären die Randlinien des Code-Bildes ermittelt.

Im Falle des Data Matrix-Codes kann weiterhin bestimmt werden, welche Seite, links oder rechts, bzw. oben oder unten, die besseren Kandidaten für Randlinien vorweist. Es wird jeweils die Seite ausgewählt, deren Hypothese für die Randlinie im direkten Vergleich zur gegenüberliegenden den höheren Wert des Merkmals M hervorgebracht hat.

Die beiden Seitenlängen m und n, welche die Anzahl der Module an der jeweiligen Seite wiedergeben, sind Eigenschaften des jeweiligen Codetyps. In der eingangs genannten Norm für Data Matrix-Code sind insgesamt 71 verschiedene Größen der quadratischen oder rechteckigen Code-Felder definiert. Mit den oben ermittelten L-Randlinien 92 und 93 und den in den Positionslisten vermerkten weiteren Randpunkten sowie unter Verwendung der Flächenausdehnung des Auswertefensters, kann durch einfaches Auszählen der im Fenster neben den beiden L-Randlinien noch platzierbaren m-1-Modulspalten und n-1-Modulzeilen der exakte Codetyp ermittelt werden. Mit dieser Feststellung der Matrixdimension ist der Codetyp identifiziert.

Bei der Identifizierung des Codetyps wird auch die Lage der beiden, den durchgehenden L-Randlinien gegenüber liegenden Randlinien 100 und 101, die in Figur 10 eingezeichnet sind, erkannt, die einen alternierenden Helligkeitsverlauf aufweisen. Die durchgehenden L-Randlinien 102 und 103 sind ebenfalls eingezeichnet.

Aus den Randlinien 100...103 werden Passpunkte zur Bestimmung der Parameter einer angenommenen affinen Abbildung zur Beschreibung der Verzerrung des Code-Bildes gegenüber dem Code-Feld gewonnen. Passpunkte sind hier die geometrischen Mittelpunkte von Modulen, für die einerseits Spaltenindex s und Zeilenindex z, andererseits auch die exakten Koordinaten im Auswertefenster (h(s,z), v(s,z)) bekannt sind. Ein Passpunkt P wird somit spezifiziert durch den Ausdruck [(s,z), (h,v)].

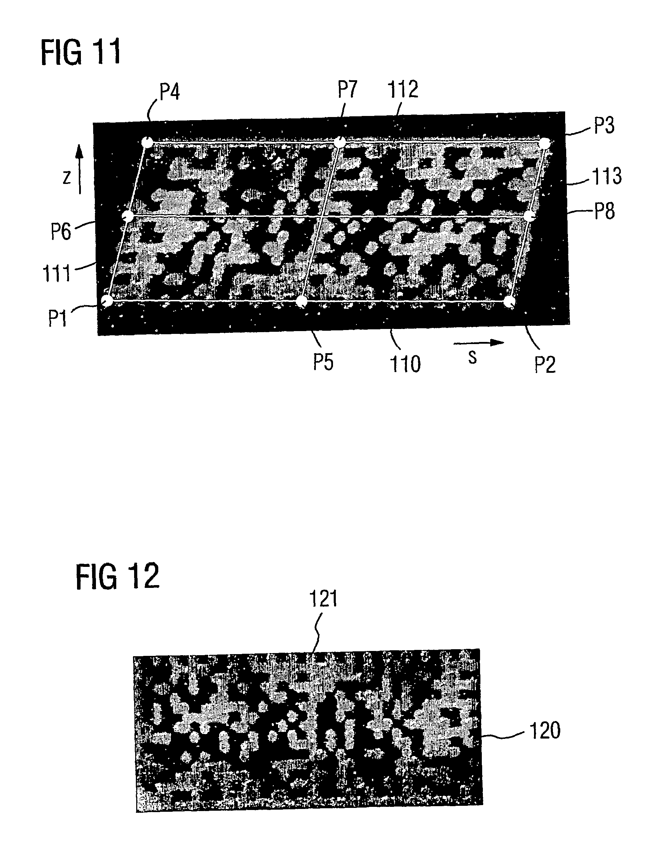

Die vier Schnittpunkte der vier Randlinien 110...113, die in Figur 11 eingezeichnet sind, sind die vier ersten Passpunkte P1, P2, P3 und P4. Ein weiterer Passpunkt P5 ergibt sich in ähnlicher Weise aus dem Schnittpunkt der unteren Randlinie 110 mit Modulspalten, die zwischen den beiden links- und rechtsseitigen Randlinien 111 und 113 angeordnet sind. Entsprechend werden Passpunkte P6, P7 und P8 als Schnittpunkte der linken Randlinie 111, der oberen Randlinie 112 und der rechten Randlinie 113 mit Modulzeilen bzw. Modulspalten festgelegt. Die Koordinaten der vier zuerst genannten Passpunkte P1...P4 sind beispielsweise für einen m*n = 36*16 Data Matrix-Code:

P1 = [(0, 0), (9, 27)]
P2 = [(35, 0), (346, 22)]
P3 = [(35, 15), (378, 153)]
P4 = [(0, 15), (45, 159)]

Prinzipiell wären alle m*n Schnittpunkte der m Modulspalten und den n Modulzeilen als Passpunkte verwendbar. Da die Endpunkte der Zeilen und Spalten aber bereits oben durch ein lineares Modell gefunden wurden, ist es nicht erforderlich, alle Punkte in die weitere Parameterschätzung einzubeziehen. Eine affine Abbildungsgleichung hat sechs Parameter. Deshalb sind mindestens drei Passpunkte mit ihren sechs Koordinatenwerten erforderlich, um die Parameter zu bestimmen, sofern die drei Passpunkte nicht auf einer Geraden liegen. Mit der bekannten Methode des kleinsten quadratischen Fehlers ist es wiederum möglich, eine größere Zahl von Passpunkten einzubeziehen, und so einen Ausgleich für Positionsfehler zu erreichen, die bei der Bestimmung der Randlinien aufgetreten sein könnten. In praktischen Versuchen hat sich eine Auswahl der Passpunkte P1...P8 gemäß Figur 11 als vorteilhaft erwiesen.

Im allgemeinen Fall liegt das Code-Bild in verzerrter Form vor. Wie bereits oben beschrieben, liegt die Ursache hierfür primär in der Anordnung der Kamera, die häufig nicht exakt lotrichtig über dem Code-Feld angeordnet werden kann. Weitere Freiheitsgrade sind die Entfernung und somit der Abbildungsmaßstab des Code-Bildes, die Verschiebung gegenüber dem Mittelpunkt des Auswertefensters sowie eine geringe Verdrehung gegenüber der Fenstergrundlinie.

Als Beschreibungsmodell für das Zusammenwirken dieser Effekte kann auf ein affines Abbildungsmodell zurückgegriffen werden. Es beschreibt die Abbildung einer physikalischen Bildszene in die Sensorbildebene einer Kamera für einen parallelperspektivischen Strahlengang. Sofern die geometrischen Abmessungen des Code-Feldes klein sind in Relation zu der Entfernung zwischen Kamera und Code-Feld wird der idealerweise zugrunde zu legende zentralperspektivische Strahlengang durch dieses Modell praxistauglich approximiert. Die affine Abbildung ist durch die zwei folgenden Gleichungen definiert:

```
h(s,z) = a*s + b*z +c;
```

$$v(s,z) = d*s + e*z + f.$$

Hierin bedeuten:

h,v -            die horizontale bzw. vertikale Verschiebeposition eines Moduls im Auswertefenster,

s,z -            die Spalten bzw. Zeilennummer eines Moduls in der Matrix mit $0 \leq s < m$, $0 \leq z < n$,

a,b,c,d,e,f -    die Modellparameter, welche die affine Abbildung beschreiben.

Die sechs Modellparameter a bis f werden anhand der Passpunkte mit Hilfe der Methode des kleinsten quadratischen Fehlers, die als solche bekannt ist, ermittelt. Mit dem ermittelten Gleichungspaar der affinen Abbildung wird nun das im Auswertefenster verzerrt vorliegende Code-Bild in eine reguläre, orthogonale Matrix mit m Spalten und n Zeilen umgesetzt. Durch geschachtelte Iteration von s über die Spaltenanzahl m und z über die Zeilenanzahl n wird für jedes Modul der Code-Matrix eine Pixelposition (h,v) für den Lesezugriff auf das Auswertefenster ermittelt. Damit ist die Verzerrung kompensiert. Mittels einer bekannten linearen Interpolation wird aus den vier Nachbarpixeln, welche die berechnete Pixelposition im Fenster umgeben, ein approximierter Helligkeitswert ermittelt und in das entsprechende Element der m*n-Code-Matrix übertragen. Die Code-Matrix wird nun einer Schwelloperation unterzogen, bei der alle Helligkeitswerte, die größer als ein vorbestimmter Schwellwert sind, durch eine 1 und alle anderen Helligkeitswerte durch eine 0 ersetzt werden. Die dabei entstehende binäre m*n-Code-Matrix kann nun in bekannter Weise durch eine geeignete Funktionseinheit decodiert werden.

In einfachen Anwendungsfällen kann der oben angeführte vorbestimmte Schwellwert durch Mittelung der Helligkeitswerte der Matrixelemente entlang der rechten Matrixspalte oder der oberen Matrixzeile ermittelt werden. Aufgrund der zyklisch alternierenden Helligkeiten entlang dieser Matrixränder gibt es nahezu gleich viele helle und dunkle Module, so dass die mittlere Helligkeit als Schwellwert gewählt werden kann.

In Fällen schlechter Bildqualität, z. B. bei schwachem Kontrast, ortsabhängigem Kontrast oder überlagerten Bildstörungen, ist es nachteilig, die binären Werte zu den einzelnen Modulen alleine aus den vier für die Interpolation genutzten, benachbarten Pixeln, die für jedes Modul aus dem Auswertefenster entnommen wurden, zu gewinnen. Statt dessen ist die Bereitstellung zusätzlicher Pixel in einer höher aufgelösten Darstellung des entzerrten Code-Feldes nützlich, um zwischengeschaltete, aufwendigere Bildverarbeitungsschritte zur Schwellwertermittlung anwenden zu können. Folgende alternative, in s und k umkalibrierte Darstellungsform der affinen Abbildungsformel erlaubt es, k*k Pixel je Modul in ein entzerrtes Code-Feld umzusetzen:

$$h(s,z) = 1/k * (a*s´ + b*z´) + c;$$

$$v(s,z) = 1/k * (d*s´ + e*z´) + f.$$

Darin sind s'= s*k und z'= z*k mit einem erweiterten Definitionsbereich für s'und z': $0 \leq s´ < m*k$ und $0 \leq z´ < m*k$. Beispielsweise für k = 10, m = 36 und n = 16 erhält man ein entzerrtes Code-Feld mit der Pixelfläche 360 x 160, welches eine Auflösung von 10 x 10 Pixeln je Modul aufweist und somit eine Basis für komplexere Bildauswertungen zur Überführung von Modulwerten in ihren korrekten, binären 0/1-Wert bildet. Ein derartiges Beispiel ist in Figur 12 dargestellt. Deutlich sind die hellen und dunklen Module des entzerrten Code-Feldes erkennbar. Daraus wird zudem deutlich, dass ein geeigneter Schwellwert für die Unterscheidung der Helligkeitswerte zur Überführung der Matrix in eine Binärcodierung in einfacher Weise durch Berechnung einer mittleren Helligkeit entlang der rechten Spalte 120 oder entlang einer oberen Zeile 121 erfolgen kann, da sich dort "helle" und "dunkle" Module abwechseln.

Im beschriebenen Ausführungsbeispiel wurde das Auswertefenster 24 (Figur 2) so gelegt, dass die untere Randlinie 100 (Figur 10) des Code-Bildes zumindest näherungsweise parallel zur Grundseite 23 (Figur 1) liegt und dass die linke Randlinie 25 um den Scherwinkel $\alpha$ geneigt ist. Es ist selbstverständlich alternativ möglich, das Auswertefenster so auszurichten, dass eine der übrigen Randlinien 101, 102 oder 103 zum näherungsweise parallel zur jeweiligen Seite des Auswertefenster liegt und einen Scherwinkel zur jeweils benachbarten Randlinie vorzubestimmen, ohne den Grundgedanken der Erfindung zu verlassen.

**Patentansprüche**

1. Verfahren zur Identifikation und Kompensation einer perspektivischen Verzerrung in einem Bild eines ebenen, zweidimensionalen, rechteckigen Code-Feldes (1, 2) mit in Zeilen und Spalten angeordneten Modulen (21, 22), dessen untere Kante im Wesentlichen parallel zu einer Grundseite (23) eines das Code-Bild umschreibenden Auswertefensters (24) liegt und dessen linke Seitenkante (25) oder rechte Seitenkante (26) mit der Grundseite (23) einen vorbestimmten Scherwinkel ($\alpha$) einschließt, mit den folgenden Schritten:

   1) Ermitteln der örtlichen Modulfrequenzen im Wesentlichen entlang der vier Seiten des Auswertefensters (24) unter Berücksichtigung des vorbestimmten Scherwinkels ($\alpha$),
   2) Ermitteln von Hypothesen für Endpunkte von Modulspalten und Modulzeilen mit Hilfe eines an die jeweilige Modulfrequenz adaptierten Filteroperators,
   3) Ermitteln von Randlinien (100...103) des Code-Bildes durch Auswerten der Helligkeitswerte der Bildpunkte entlang als Randlinie in Frage kommender Verbindungslinien (90, 91) zwischen einander gegenüberliegenden Hypothesen für Endpunkte und Auswahl der hypothetischen Randlinien nach einem vorbestimmten Kriterium,
   4) Ermitteln der Zeilen- und Spaltenzahl des zweidimensionalen Code-Feldes als Anzahl der auf und zwischen der oberen und unteren Randlinie (102; 100) des Code-Bildes liegenden Hypothesen für Endpunkte bzw. als Anzahl der auf und zwischen der linken und rechten Randlinie (101; 103) des Code-Bildes liegenden Hypothesen für Endpunkte,
   5) Festlegen von zumindest drei Punkten des Code-Bildes als Passpunkte (P1...P8) und Berechnen der Parameter einer affinen Abbildung, welche die Bildverzerrung zumindest näherungsweise beschreibt, und
   6) Berechnen der Position im Code-Bild für jedes Modul des Code-Feldes anhand der Parameter der affinen Abbildung.

2. Verfahren nach Anspruch 1, **dadurch** gekenn - zeichnet , dass das Ermitteln der örtlichen Modulfrequenzen gemäß Schritt 1 in die folgenden Zwischenschritte untergliedert ist:

   1a) Durchführen einer Kantenfilterung zur Hervorhebung zumindest vertikaler Kanten im oberen und unteren Randbereich und zumindest horizontaler Kanten im linken und rechten Randbereich des Code-Bildes,
   1b) Berechnen eindimensionaler Projektionssignale (Pk) für jeden Randbereich durch Aufsummieren der kantengefilterten Helligkeitswerte in einer dem Scherwinkel ($\alpha$) entsprechenden Richtung für den oberen und den unteren Randbereich und in einer horizontalen Richtung für den linken und den rechten Randbereich und
   1c) Ermitteln der örtlichen Modulfrequenzen anhand der Lage der lokalen Maxima der Autokovarianz für die berechneten Projektionssignale (Pk).

3. Verfahren nach Anspruch 1 oder 2, **dadurch** ge- kennzeichnet , dass das Ermitteln der Hypothesen für Endpunkte von Modulspalten und Modulzeilen gemäß Schritt 2 in die folgenden Zwischenschritte untergliedert ist:

   2a) Bestimmen eines Definitionsbereichs (Rk) des Filteroperators entsprechend der jeweiligen Modulfrequenz (nk),
   2b) Ermitteln eines Signals (Hk) durch Berechnen einer nichtlinearen Filteroperation aus dem jeweiligen Projektionssignal (Pk), wobei die Filteroperation derart ausgebildet ist, dass das Signal (Hk) besonders hohe positive Werte an den Stellen annimmt, an denen an beiden Endpunkten des der jeweiligen Stelle zugeordneten Definitionsbereichs hohe Werte des Projektionssignals (Pk) vorliegen und gleichzeitig der minimale Wert des Projektionssignals (Pk) im Definitionsbereich klein ist,
   2c) Übernehmen der lokalen Maximalwerte des Signals (Hk) als vorläufige Hypothesen für die Endpunkte und
   2d) Bestimmen der Hypothesen für die Endpunkte anhand der vorläufigen Hypothesen und der jeweiligen örtlichen Modulfrequenz mit Hilfe der Methode des kleinsten quadratischen Fehlers.

4. Verfahren nach einem der vorhergehenden Ansprüche, da - durch **gekennzeichnet** , dass der Code ein Data Matrix-Code ist und dass das Ermitteln von Randlinien des Code-Bildes gemäß Schritt 3 in die folgenden Zwischenschritte untergliedert ist:

   3a) Berechnen eines jeweiligen Mittelwertes m der Bildhelligkeit und einer Streuung $\sigma$ der Bildhelligkeit um den Mittelwert m entlang aller, als Randlinie in Frage kommender Verbindungslinien zwischen einander gegenüberliegenden Hypothesen für Endpunkte,
   3b) Bestimmen zweier Verbindungslinie (102, 103) in den vier seitlichen Randbereichen des Auswertefensters (24), für die sich der größte Wert des Merkmals M mit

$$M = m^2 \cdot (\sigma + m + 1)$$

ergibt, als durchgehende L-Randlinien des Data Matrix-Codes in einander benachbarten seitlichen Randbereichen, und

3c) Bestimmen der alternierenden L-Randlinien des Data Matrix-Codes als diejenigen Randlinien, welche den durchgehenden L-Randlinien gegenüber liegen.

5. Verfahren nach einem der vorhergehenden Ansprüche, da - durch **gekennzeichnet** , dass im Schritt 5 zumindest die vier Schnittpunkte der Randlinien als Passpunkte (P1...P4) festgelegt werden und dass die Parameter der affinen Abbildung mit der Methode des kleinsten quadratischen Fehlers berechnet werden.

6. Vorrichtung zur Durchführung des Verfahrens nach einem der vorhergehenden Ansprüche, mit einer Bildaufnahmeeinrichtung (7) zur Aufnahme eines Bildes eines zweidimensionalen Code-Feldes (1, 2) auf einem Objekt (3, 4) und zur Bilddatenerzeugung und

mit einer Bildverarbeitungseinrichtung (11, 12), da - durch **gekennzeichnet** , dass die Bildverarbeitungseinrichtung derart ausgebildet ist, dass zur Identifikation und Kompensation einer perspektivischen Verzerrung in einem Bild des ebenen, zweidimensionalen, rechteckigen Code-Feldes (1, 2) mit in Zeilen und Spalten angeordneten Modulen, dessen untere Kante im Wesentlichen parallel zu einer Grundseite (23) eines das Code-Bild umschreibenden Auswertefensters (24) liegt und dessen linke Seitenkante (25) oder rechte Seitenkante (26) mit der Grundseite einen vorbestimmten Scherwinkel ($\alpha$) einschließt, die folgenden Schritte ausgeführt werden:

1) Ermitteln der örtlichen Modulfrequenzen im Wesentlichen entlang der vier Seiten des Auswertefensters (24) unter Berücksichtigung des vorbestimmten Scherwinkels ($\alpha$),
2) Ermitteln von Hypothesen für Endpunkte von Modulspalten und Modulzeilen mit Hilfe eines an die jeweilige Modulfrequenz adaptierten Filteroperators,
3) Ermitteln von Randlinien (100...103) des Code-Bildes durch Auswerten der Helligkeitswerte der Bildpunkte entlang als Randlinie in Frage kommender Verbindungslinien (90, 91) zwischen einander gegenüberliegenden Hypothesen für Endpunkte und Auswahl der hypothetischen Randlinien nach einem vorbestimmten Kriterium,
4) Ermitteln der Zeilen- und Spaltenzahl des zweidimensionalen Code-Feldes als Anzahl der auf und zwischen der oberen und unteren Randlinie (102; 100) des Code-Bildes liegenden Hypothesen für Endpunkte bzw. als Anzahl der auf und zwischen der linken und rechten Randlinie (101; 103) des Code-Bildes liegenden Hypothesen für Endpunkte,
5) Festlegen von zumindest drei Punkten des Code-Bildes als Passpunkte (P1...P8) und Berechnen der Parameter einer affinen Abbildung, welche die Bildverzerrung zumindest näherungsweise beschreibt, und
6) Berechnen der Position im Code-Bild für jedes Modul des Code-Feldes anhand der Parameter der affinen Abbildung.

## Claims

1. Method for identifying and compensating for a perspective distortion in an image of a flat, two-dimensional, rectangular code field (1, 2) with modules (21, 22) arranged in rows and columns, of which the lower edge lies essentially in parallel to a base side (23) of an evaluation window (24) enclosing the code image and of which the left-hand edge (25) or right-hand edge (26) encloses a predetermined angle of shear (á) with the base side (23), with the following steps:

1) Determining the local module frequencies essentially along the four sides of the evaluation window (24) taking into account the predetermined angle of shear (á),
2) Determining hypotheses for endpoints of module columns and module rows with the aid of a filter operator adapted to the relevant module frequency,
3) Determining edge lines (100...103) of the code image by evaluating the brightness values of the pixels along connecting lines (90, 91) considered as edge lines between hypotheses for endpoints lying opposite each other and selection of the hypothetical edge lines according to a predetermined criterion,
4) Determining the line and column number of the two-dimensional code field as the number of hypotheses for endpoints lying on and between the upper and lower edge line (102;100) of the code image or as the number of hypotheses for endpoints lying on and between the left-hand and right-hand edge line (101;103) of the code image,

5) Defining at least three points of the code image as passpoints (P1...P8) and computing the parameters of an affine transformation, which at least approximately describes the image distortion, and

6) Computing the position in the code image for each module of the code field with reference to the parameters of the affine transformation.

2.  Method in accordance with claim 1, **characterized in that** the determining of the local module frequencies in accordance with step 1 is subdivided into the following intermediate steps:

    1a) Performing an edge filtering for highlighting at least vertical edges in the upper and lower edge area and at least horizontal edges in the left-hand and right-hand edge area of the code image,

    1b) Computing one-dimensional projection signals (Pk) for each edge area by summing the edge-filtered brightness values in a direction corresponding to the angle of shear (á) for the upper and lower edge area and in a horizontal direction for the left-hand and right-hand edge area and

    1c) Determining local module frequencies with reference to the location of the local maxima of the auto covariance for the computed projection signals (Pk).

3.  Method in accordance with claim 1 or 2, **characterized in that** the determination of the hypotheses for endpoints of module columns and module rows in accordance with step 2 is subdivided into the following intermediate steps:

    2a) Determining a definition range (Rk) of the filter operator corresponding to the relevant module frequency (nk),

    2b) Determining a signal (Hk) by computing a non-linear filter operation from the relevant projection signal (Pk), with the filter operation being embodied such that the signal (Hk) assumes especially high positive values at the points at which at the two endpoints of the definition area assigned to the relevant position there are high values of the projection signal (Pk) and simultaneously the minimum value of the projection signal (Pk) in the definition area is small,

    2c) Transferring the local maximum values of the signal (Hk) as provisional hypotheses for the endpoints and

    2d) Determining the hypotheses for the endpoints with reference to the provisional hypotheses and the relevant local module frequency with the aid of the recursive least square method.

4.  Method in accordance with one of the previous claims, **characterized in that** the code is a data matrix code is and that the determining of edge lines of the code image in accordance with step 3 is subdivided into the following intermediate steps:

    3a) Calculating a respective mean value m of the image brightness and a distribution ó of the image brightness around the mean value m along all connecting lines considered as edge lines between opposite hypotheses for endpoints,

    3b) Determining two connecting lines (102, 103) in the four lateral edge areas of the evaluation window (24), for which the largest value of the characteristic M with

    $$M = m^2 . ( ó+m+ 1 )$$

    is produced as continuous L edge lines of the data matrix codes in adjacent lateral edge areas, and

    3c) Determining the alternating L edge lines of the data matrix code as those edge lines which lie opposite the continuous L edge lines.

5.  Method in accordance with one of the previous claims, **characterized in that**. in step 5, at least the four intersection points of the edge lines are determined as passpoints (P1...P4) and that the parameters of the affine transformation are calculated with the recursive least square method.

6.  Device for executing the method in accordance with one of the previous claims, with an image recording device (7) for recording an image of a two-dimensional code field (1, 2) on an object (3, 4) and for image data creation and with an image processing device (11, 12), **characterized in that** the image processing device is embodied in such a way that, for identification and compensation of a perspective distortion in a image of the flat, two-dimensional rectangular code-field (1, 2) with modules arranged in rows and columns, the lower edge of which lies essentially parallel to a base side (23) of an evaluation window (24) circumscribing the code image and of which the left-hand side edge (25) or right-hand side edge (26) with the base side encloses a prespecified shear angle (a), the following stops are executed:

1) Determining the local module frequencies essentially along the four sides of the evaluation window (24) taking into account the prespecified shear angle (a),
2) Determining hypotheses for endpoints of module columns and module rows with the aid of a filter operator adapted to the relevant module frequency,
3) Determining edge lines (100...103) of the code image by evaluating the brightness values of the pixels along connecting lines (90, 91) considered as edge lines between hypotheses for endpoints lying opposite each other and selection of the hypothetical edge lines according to a predetermined criterion,
4) Determining the line and column number of the two-dimensional code field as the number of hypotheses for endpoints lying on and between the upper and lower edge line (102;100) of the code image or as the number of hypotheses for endpoints lying on and between the left and right edge line (101;103) of the code image,
5) Defining at least three points of the code image as passpoints (P8...P8) and computing the parameters of an affine transformation, which at least approximately describes the image distortion, and
6) Computing the position in the code image for each module of the code field with reference to the parameters of the affine transformation.

**Revendications**

1. Procédé pour identifier et compenser une distorsion de perspective d'une image d'un champ de code (1, 2) rectangulaire, plan, à deux dimensions, comprenant des modules (21, 22) agencés en lignes et en colonnes, dont le bord inférieur s'étend sensiblement de manière parallèle à un côté de base (23) d'une fenêtre de traitement (24) circonscrite à l'image de code, et dont le bord latéral gauche (25) ou le bord latéral droit (26) fait avec le côté de base (23), un angle d'obliquité ($\alpha$) prédéterminé, le procédé comprenant les étapes suivantes :

1) détermination des fréquences de module locales sensiblement le long des quatre côtés de la fenêtre de traitement (24) en tenant compte de l'angle d'obliquité ($\alpha$) prédéterminé,
2) détermination d'hypothèses pour des points d'extrémité de colonnes de module et de lignes de module à l'aide d'un opérateur de filtre adapté à la fréquence de module respectivement considérée,
3) détermination de lignes de bordure (100...103) de l'image de code par traitement des valeurs de luminosité des points image le long de lignes de liaison (90, 91), qui entrent en ligne de compte en tant que ligne de bordure, entre des hypothèses mutuellement opposées pour des points d'extrémité, et sélection des lignes de bordure hypothétiques selon un critère prédéterminé,
4) détermination du nombre de lignes et de colonnes du champ de code à deux dimensions en tant que nombre des hypothèses pour points d'extrémité situées sur et entre les lignes de bordure supérieure et inférieure (102 ; 100) de l'image de code, et respectivement en tant que nombre des hypothèses pour points d'extrémité situées sur et entre les lignes de bordure gauche et droite (101 ; 103) de l'image de code,
5) fixation d'au moins trois points de l'image de code en tant que points de référence (P1...P8) et calcul des paramètres d'une représentation affine, qui décrit au moins approximativement la distorsion d'image, et
6) calcul de la position dans l'image de code pour chaque module du champ de code à l'aide des paramètres de la représentation affine.

2. Procédé selon la revendication 1, **caractérisé en ce que** la détermination des fréquences de module locales selon l'étape 1 est subdivisée en les étapes intermédiaires suivantes :

1a) réalisation d'un filtrage de bordure pour mettre en évidence au moins des bords verticaux dans la zone de bordure supérieure et inférieure, et au moins des bords horizontaux dans la zone de bordure gauche et droite de l'image de code,
1b) calcul de signaux de projection (Pk) à une dimension pour chaque zone de bordure, par la sommation des valeurs de luminosité ayant subi le filtrage de bordure, dans une direction correspondant à l'angle d'obliquité ($\alpha$) pour la zone de bordure supérieure et inférieure, et dans une direction horizontale pour la zone de bordure gauche et droite, et
1c) détermination des fréquences de module locales à l'aide des maximas locaux de l'auto-covariance pour les signaux de projection (Pk) calculés.

3. Procédé selon la revendication 1 ou 2, **caractérisé en ce que** la détermination des hypothèses pour des points d'extrémité de colonnes de module et de lignes de module selon l'étape 2, est subdivisée en les étapes intermédiaires suivantes :

2a) détermination d'une plage de définition (Rk) de l'opérateur de filtre conformément à la fréquence de module (nk) respectivement considérée,

2b) détermination d'un signal (Hk) par calcul d'une opération de filtrage non linéaire à partir du signal de projection respectif (Pk), l'opération de filtrage étant conçue de façon telle que le signal (Hk) prenne des valeurs positives particulièrement grandes aux endroits où existent, aux deux points d'extrémité de la plage de définition associée à l'endroit respectivement considéré, des valeurs grandes du signal de projection (Pk), et où simultanément la valeur minimale du signal de projection (Pk) est petite dans la zone de définition,

2c) adoption des valeurs maximales locales du signal (Hk) en tant qu'hypothèses provisoires pour les points d'extrémité, et

2d) détermination des hypothèses pour les points d'extrémité à l'aide des hypothèses provisoires et des fréquences de modules locales respectives à l'aide de la méthode de la plus petite erreur quadratique.

4. Procédé selon l'une des revendications précédentes, **caractérisé en ce que** le code est un code matriciel de données et **en ce que** la détermination de lignes de bordure de l'image de code selon l'étape 3 est subdivisée en les étapes intermédiaires suivantes :

3a) calcul d'une valeur moyenne respective m de la luminosité d'image et d'un écart-type $\sigma$ de la luminosité d'image autour de la valeur moyenne m le long de toutes les lignes de liaison, qui entrent en ligne de compte en tant que ligne de bordure, entre des hypothèses mutuellement opposées pour des points d'extrémité,

3b) détermination de deux lignes de liaison (102, 103) dans les quatre zones de bordure latérales de la fenêtre de traitement (24), pour lesquelles est obtenue la plus grande valeur de la caractéristique M, avec

$$M = m^2 . (\sigma+m+1)$$

en tant que lignes de bordure L continues du code matriciel de données dans des zones de bordure latérales mutuellement voisines, et

3c) détermination des lignes de bordure L alternantes du code matriciel de données comme étant les lignes de bordure qui sont opposées aux lignes de bordure L continues.

5. Procédé selon l'une des revendications précédentes, **caractérisé en ce que** dans l'étape 5 on définit au moins les quatre points d'intersection des lignes de bordure en tant que points de référence (P1...P4), et **en ce que** les paramètres de la représentation affine sont calculés par la méthode de la plus petite erreur quadratique.

6. Dispositif pour la mise en oeuvre du procédé selon l'une des revendications précédentes, comprenant un dispositif de prise de vues (7) pour capter l'image d'un champ de code (1, 2) à deux dimensions sur un objet (3, 4) et pour produire des données d'image, et comprenant un système de traitement d'image (11, 12), **caractérisé en ce que** le système de traitement d'image est conçu de façon à ce que pour identifier et compenser une distorsion de perspective d'une image d'un champ de code (1, 2) rectangulaire, plan, à deux dimensions, comprenant des modules (21, 22) agencés en lignes et en colonnes, dont le bord inférieur s'étend sensiblement de manière parallèle à un côté de base (23) d'une fenêtre de traitement (24) circonscrite à l'image de code, et dont le bord latéral gauche (25) ou le bord latéral droit (26) fait avec le côté de base (23), un angle d'obliquité ($\alpha$) prédéterminé, on effectue les étapes suivantes :

1) détermination des fréquences de module locales sensiblement le long des quatre côtés de la fenêtre de traitement (24) en tenant compte de l'angle d'obliquité ($\alpha$) prédéterminé,

2) détermination d'hypothèses pour des points d'extrémité de colonnes de module et de lignes de module à l'aide d'un opérateur de filtre adapté à la fréquence de module respectivement considérée,

3) détermination de lignes de bordure (100...103) de l'image de code par traitement des valeurs de luminosité des points image le long de lignes de liaison (90, 91), qui entrent en ligne de compte en tant que ligne de bordure, entre des hypothèses mutuellement opposées pour des points d'extrémité, et sélection des lignes de bordure hypothétiques selon un critère prédéterminé,

4) détermination du nombre de lignes et de colonnes du champ de code à deux dimensions en tant que nombre des hypothèses pour points d'extrémité situées sur et entre les lignes de bordure supérieure et inférieure (102 ;

100) de l'image de code, et respectivement en tant que nombre des hypothèses pour points d'extrémité situées sur et entre les lignes de bordure gauche et droite (101 ; 103) de l'image de code,

5) fixation d'au moins trois points de l'image de code en tant que points de référence (P1...P8) et calcul des paramètres d'une représentation affine, qui décrit au moins approximativement la distorsion d'image, et

6) calcul de la position dans l'image de code pour chaque module du champ de code à l'aide des paramètres de la représentation affine.

FIG 1

EP 1 586 070 B1

FIG 2

FIG 3

FIG 4

15

FIG 5

FIG 6

FIG 7

## FIG 8

80 →                                              ← 80

## FIG 9

92

90                                                93

91

## FIG 10

102

101                                              103

100

## FIG 11

## FIG 12